# EUROPÄISCHE PATENTSCHRIFT

(11) **EP 1 893 675 B1**
(45) Veröffentlichungstag und Bekanntmachung des Hinweises auf die Patenterteilung: **01.10.2008**
(21) Anmeldenummer: 06763606.8
(22) Anmeldetag: 09.06.2006
(51) Int. Cl.: C08J 9/224

(54) **HYDROPHOBIN ALS BESCHICHTUNGSMITTEL FÜR EXPANDIERBARE ODER EXPANDIERTE, THERMOPLASTISCHE POLYMERPARTIKEL**
HYDROPHOBIN AS A COATING AGENT FOR EXPANDABLE OR EXPANDED THERMOPLASTIC POLYMER PARTICLES
HYDROPHOBINE UTILISEE EN TANT QUE SUBSTANCE DE REVETEMENT POUR DES PARTICULES POLYMERES THERMOPLASTIQUES EXPANSIBLES OU EXPANSEES

(30) Priorität: 10.06.2005 DE 102005027039
(43) Veröffentlichungstag der Anmeldung: 05.03.2008
(73) Patentinhaber: BASF SE, 67056 Ludwigshafen (DE)
(72) Erfinder: EXNER, Christian, 67433 Neustadt (DE); BAUS, Ulf, 69221 Dossenheim (DE); HOLOCH, Jan, 69181 Leimen (DE); BOLLSCHWEILER, Claus, 69118 Heidelberg (DE); SUBKOWSKI, Thomas, 68526 Ladenburg (DE); KAROS, Marvin, 68723 Schwetzingen (DE); LEMAIRE, Hans-Georg, 67117 Limburgerhof (DE)
(86) Internationale Anmeldenummer: PCT/EP2006/063037
(87) Internationale Veröffentlichungsnummer: WO 2006/131555

(56) Entgegenhaltungen:
- EP-A2- 0 470 455
- WO-A2-20/05033316

## Beschreibung

Die Erfindung betrifft expandierbare oder expandierte, thermoplastische Polymer-Partikel mit einer Beschichtung enthaltend Hydrophobin, sowie Verfahren zu deren Herstellung.

Um die störungsfrei Förderung von expandierbarem Polystyrol zu ermöglichen und die elektrostatische Aufladung der vorgeschäumten Polystyrolschaumpartikel zu vermindern, wird in der Regel eine Beschichtung der EPS-Partikel mit einem Antistatikum verwendet. Abrieb oder Abwaschung des Beschichtungsmittels von der Oberfläche der Partikel führt häufig zu nicht zufriedensfellenden antistatischen Eigenschaften. Des weiteren kann die Beschichtung mit dem Antistatikum zur Verklebung der Partikel und schlechtem Rieselverhalten führen.

Die EP-A 470 455 beschreibt perlförmige antistatische expandierbare Styrolpolymerisate mit einer Beschichtung aus einem quartärnären Ammoniumsalz und feinteiliger Kieselsäure, die sich durch ein gutes Rieselverhalten auszeichnen.

Hydrophobine sind kleine Proteine von etwa 100 bis 150 Aminosäuren, die charakteristisch für filamentöse Pilze, beispielsweise *Schizophyllum commune,* sind. Sie weisen in aller Regel 8 Cystein-Einheiten auf.

Hydrophobine weisen eine ausgeprägte Affinität zu Grenzflächen auf und eignen sich daher zur Beschichtung von Oberflächen. So lässt sich beispielsweise Teflon mittels Hydrophobinen unter Erhalt einer hydrophilen Oberfläche beschichten.

Hydrophobine können aus natürlichen Quellen isoliert werden. Unsere ältere Anmeldung DE 102005007480.4 offenbart ein Herstellverfahren für Hydrophobine.

Im Stand der Technik ist die Verwendung von Hydrophobinen für verschiedene Anwendungen vorgeschlagen worden.

WO 96/41882 schlägt die Verwendung von Hydrophobinen als Emulgatoren, Verdicker, oberflächenaktive Substanzen, zum Hydrophilieren hydrophober Oberflächen, zur Verbesserung der Wasserbeständigkeit hydrophiler Substrate, zur Herstellung von Öl-in-Wasser-Emulsionen oder von Wasser-in-ÖI-Emulsionen vor. Weiterhin werden pharmazeutische Anwendungen wie die Herstellung von Salben oder Cremes sowie kosmetische Anwendungen wie Hautschutz oder die Herstellung von Haarshampoos oder Haarspülungen vorgeschlagen.

WO 01/57528 offenbart die Beschichtung von Fenstern, Kontaktlinsen, Biosensoren, medizinischen Vorrichtungen, Behältern zur Durchführung von Versuchen oder zur Lagerung, Schiffrümpfen, festen Teilchen oder Rahmen oder Karosserie von Personenkraftwagen mit einer Hydrophobine enthaltenden Lösung bei einer Temperatur von 30 bis 80°C.

WO 03/53383 offenbart die Verwendung von Hydrophobin zum Behandeln von Keratin-Materialien in kosmetischen Anwendungen.

WO 03/10331 offenbart einen mit Hydrophobin beschichteten Sensor, beispielsweise eine Messelektrode, an den nicht kovalent weitere Substanzen, z.B. elektroaktive Substanzen, Antikörper oder Enzyme gebunden sind.

Aufgabe der vorliegenden Erfindung war es daher den genannten Nachteilen abzuhelfen und ein antistatisches Beschichtungsmittel für expandierbare oder expandierte thermoplastische Polymerpartikel zu finden, das beim Vorschäumen oder beim Verschäumen zu niedrigeren Dichten eine verringerte Neigung zum Verkleben der Partikel zeigt.

Demgemäß wurden die oben genannten expandierbaren oder expandierten, thermoplastische Polymer-Partikel gefunden.

Bevorzugt enthält die Beschichtung 1 bis 5000 ppm, insbesondere 10 bis 1000 ppm Hydrophobin, bezogen auf das thermoplastische Polymer. Die Beschichtung kann weitere Antistatika und/oder Beschichtungshilfstoffe enthalten oder auf weiteren Beschichtungen mit anderen Beschichtungsmitteln aufgebracht werden. Besonders bevorzugt wird eine Beschichtung, die nur aus Hydrophobin oder Mischungen von Hydrophobin besteht und eine mono-molekulare Schicht auf den expandierbaren oder expandierten thermoplastischen Polymer-Partikel ausbildet.

Für die expandierbaren oder expandierten, thermoplastischen Polymer-Partikel werden bevorzugt Styrolpolymere, wie Polystyrol (EPS) oder Polyolefine, wie Polyethylen (EPE) oder Polypropylen (EPP) verwendet.

Expandierbare thermoplastische Polymer-Partikel sind solche, die durch z. B. mit Heißluft oder Wasserdampf zu expandierten, thermoplastischen Polymer-Partikel verschäumbar sind. Sie enthalten in der Regel chemische oder physikalische Treibmittel in Mengen von 2 bis 10 Gew.-%, bevorzugt 3 bis 7 Gew.-% bezogen auf das thermoplastische Polymer.

Bevorzugte physikalische Treibmittel sind Gase, wie Stickstoff oder Kohlendioxid oder aliphatische Kohlenwasserstoffe mit 2 bis 7 Kohlenstoffatomen, Alkohole, Ketone, Ether oder halogenierte Kohlenwasserstoffe. Besonders bevorzugt werden iso-Butan, n-Butan, iso-Pentan, n-Pentan, neo-Pentan, Hexan oder Gemische davon eingesetzt.

Des weiteren können die expandierbaren und expandierten thermoplastischen Polymer-Partikel üblische Hilfstoffe, wie Farbstoffe, Pigmente, Füllstoffe, IR-Absorber, wie Ruß, Aluminium oder Graphit, Stabilisatoren, Flammschutzmittel, wie Hexabromcylododecan (HBCD), Flammschutzsynergisten, wie Dicumyl oder Dicumylperoxid, Keimbildner oder Gleitmittel in wirksamen Mengen enthalten.

Die erfindungsgemäßen, expandierbaren thermoplastische Polymer-Partikel können je nach Herstellverfahren kugel- bzw. perlförmig oder zylinderförmig sein und weisen in der Regel einen mittleren Teilchendurchmesser im Bereich von 0,05 bis 5 mm, insbesondere 0,3 bis 2,5 mm auf, die gegebenenfalls durch Siebung in einzelne Fraktionen aufgeteilt werden können.

Die expandierten thermoplastischen Polymer-Partikel haben entsprechend dem Expansionsgrad mittlere Teilchendurchmesser im Bereich von 1 bis 10 mm, insbesondere 2 bis 6 mm und eine Dichte im Bereich von 10 bis 200 kg/m³.

Die expandierbaren thermoplastischen Polymer-Partikel können beispielsweise durch Druckimprägnierung von thermoplastischen Polymer-Partikeln mit Treibmitteln in einem Kessel, durch Suspensionspolymerisation in Gegenwart von Treibmitteln oder durch Schmelzeimprägnierung in einem Extruder oder statischen Mischer und anschließende Druckunterwassergranulierung erhalten werden.

Expandierte thermoplastische Polymerpartikel können durch Verschäumen von expandierbaren thermoplastischen Polymer-Partikeln, z B. mit Heißluft oder Wasserdampf in Druckvorschäumern, durch Druckimprägnierung von thermoplastischen Polymer-partikeln mit Treibmitteln in einem Kessel und anschließendem Entspannen oder durch Schmelzeextrusion einer treibmittelhaltigen Schmelze unter Aufschäumen und anschließender Granulierung.

Unter dem Begriff "Hydrophobine" im Sinne dieser Erfindung sollen im Folgenden Proteine der allgemeinen Strukturformel (I)

Xₙ-C¹-X₁₋₅₀-C²-X₀₋₅-C³-X₁₋₁₀₀-C⁴-X₁₋₁₀₀-C⁵-X₁₋₅₀-C⁶-X₀₋₅C⁷-X₁₋₅₀-C⁸-Xₘ (I)

verstanden werden, wobei X für jede der 20 natürlich vorkommenden Aminosäuren (Phe, Leu, Ser, Tyr, Cys, Trp, Pro, His, Gln, Arg, Ile Met, Thr, Asn, Lys, Val, Ala, Asp, Glu, Gly) stehen kann. Dabei können X jeweils gleich oder verschieden sein. Hierbei stellen die bei X stehenden Indizes jeweils die Anzahl der Aminosäuren dar, C steht für Cystein, und die Indizes n und m stehen unabhängig voneinander für natürliche Zahlen von 0 und 500, bevorzugt von15 bis 300.

Die Polypetide gemäß Formel (I) sind weiterhin durch die Eigenschaft charakterisiert, dass sie bei Raumtemperatur nach Beschichten einer Glasoberfläche eine Vergrößerung des Kontaktwinkels eines Wassertropfens von mindestens 20°, bevorzugt mindestens 25° und besonders bevorzugt 30° bewirken, jeweils verglichen mit dem Kontaktwinkel eines gleich großen Wassertropfens mit der unbeschichteten Glasoberfläche.

Die mit C¹ bis C⁸ benannten Cysteine können entweder reduziert vorliegen oder miteinander Disulfidbrücken ausbilden. Besonders bevorzugt ist die intramolekulare Ausbildung von C-C Brücken, insbesondere die mit mindestens einer, bevorzugt 2, besonders bevorzugt 3 und ganz besonders bevorzugt 4 intramolekularen Disulfidbrücken.

Bevorzugt werden Hydrophobine der allgemeinen Formel (II)

Xₙ-C¹-X₃₋₂₅-C²-X₀₋₂-C³-X₅₋₅₀-C⁴-X₂₋₃₅-C⁵-X₂₋₁₅-C⁶-X₀₋₂C⁷-X₃₋₃₅-C⁸-Xₘ (II)

zur Ausführung der vorliegenden Erfindung eingesetzt, wobei X, C und die bei X und C stehenden Indizes die obige Bedeutung haben, jedoch stehen die Indizes n und m für Zahlen zwischen 0 und 300, und sich die Proteine weiterhin durch die oben erwähnte Kontaktwinkeländerung auszeichnen.

Besonders bevorzugt werden Hydrophobine der allgemeinen Formel (III)

Xₙ-C¹-X₅₋₉-C²-C³-X₁₁₋₃₉-C⁴-X₂₋₂₃-C⁵-X₅₋₉-C⁶-C⁷-X₅₋₁₈-C⁸-Xₘ (III)

eingesetzt, wobei X, C und die bei X und C stehenden Indizes die obige Bedeutung haben, die Indizes n und m für Zahlen zwischen 0 und 200 stehen, und sich die Proteine weiterhin durch die oben erwähnte Kontaktwinkeländerung auszeichnen.

Bei den Resten Xₙ und Xₘ kann es sich um Peptidsequenzen handeln, die natürlicherweise mit einem Hydrophobin verknüpft sind. Es kann sich aber auch bei einem oder beiden Resten um Peptidsequenzen handeln, die natürlicherweise nicht mit einem Hydrophobin verknüpft sind. Darunter sind auch solche Reste Xₙ und/oder Xₘ zu verstehen, bei denen eine natürlicherweise in einem Hydrophobin vorkommende Peptidsequenz durch eine nicht natürlicherweise in einem Hydrophobin vorkommende Peptidsequenz verlängert ist.

Falls es sich bei Xₙ und/oder Xₘ um natürlicherweise nicht mit Hydrophobinen verknüpfte Peptidsequenzen handelt, sind derartige Sequenzen in der Regel mindestens 20, bevorzugt mindestens 35, besonders bevorzugt mindestens 50 und ganz besonders bevorzugt mindestens 100 Aminosäuren lang. Ein derartiger, natürlicherweise nicht mit einem Hydrophobin verknüpfter Rest soll im Folgenden auch als Fusionspartner bezeichnet werden. Damit soll ausgedrückt werden, dass die Proteine aus mindestens einem Hydrophobinteil und einem Fusionspartner bestehen können, die in der Natur nicht zusammen in dieser Form vorkommen.

Der Fusionspartner kann aus einer Vielzahl von Proteinen ausgewählt werden. Es können auch mehrere Fusionspartner mit einem Hydrophobinteil verknüpft werden, beispielsweise am Aminoterminus (Xₙ) und am Carboxyterminus (Xₘ) des Hydrophobinteils. Es können aber auch beispielsweise zwei Fusionspartnerteile mit einer Position (Xₙ oder Xₘ) des erfindungsgemäßen Proteins verknüpft werden.

Besonders geeignete Fusionspartnerteile sind Proteine, die natürlicherweise in Mikroorganismen, insbesondere in E. coli oder Bacillus subtilis vorkommen. Beispiele für solche Fusionspartnerteile sind die Sequenzen yaad (SEQ ID NO:15 und 16) , yaae(SEQ ID NO:17 und 18), und Thioredoxin. Gut geeignet sind auch Fragmente oder Derivate dieser genannten Sequenzen, die nur einen Teil, bevorzugt 70-99%, besonders bevorzugt 80-98% der genannten Sequenzen umfassen, oder bei denen einzelne Aminosäuren, bzw. Nukleotide gegenüber der genannten Sequenz verändert sind, wobei sich die Prozentangaben jeweils auf die Anzahl der Aminosäuren bezieht.

Die erfindungsgemäß verwendeten Proteine können auch noch in ihrer Polypeptidequenz modifiziert sein, beispielsweise durch Glycosilierung, Acetylierung oder auch durch chemische Quervernetzung beispielsweise mit Glutardialdehyd.

Eine Eigenschaft der erfindungsgemäß verwendeten Proteine ist die Änderung von Oberflächeneigenschaften, wenn die Oberflächen mit den Proteinen beschichtet werden. Die Änderung der Oberflächeneigenschaften lässt sich experimentell dadurch bestimmen, dass der Kontaktwinkel eines Wassertropfens vor und nach der Beschichtung der Oberfläche mit dem Protein gemessen wird und die Differenz der beiden Messungen ermittelt wird.

Die Durchführung von Kontaktwinkelmessungen ist dem Fachmann prinzipiell bekannt. Die Messungen beziehen sich auf Raumtemperatur sowie Wassertropfen von 5 □|. Die genauen experimentellen Bedingungen für eine beispielhaft geeignete Methode zur Messung des Kontaktwinkels sind im experimentellen Teil dargestellt. Unter den dort genannten Bedingungen besitzen die erfindungsgemäß verwendeten Proteine die Eigenschaft, den Kontaktwinkel um mindestens 20°, bevorzugt mindestens 25°, besonders bevorzugt mindestens 30° zu vergrößern, jeweils verglichen mit dem Kontaktwinkel eines gleich großen Wassertropfens mit der unbeschichteten Glasoberfläche.

Im Hydrophobinteil der bisher bekannten Hydrophobine sind die Positionen der polaren und unpolaren Aminosäuren konserviert, was sich in einem charakteristischen Hydrophobizitätsplot äußert. Unterschiede in den biophysikalischen Eigenschaften und in der Hydrophobizität führten zur Einteilung der bisher bekannten Hydrophobine in zwei Klassen, I und II (Wessels et al. 1994, Ann. Rev. Phytopathol., 32, 413-437).

Die assemblierten Membranen aus Klasse I Hydrophobinen sind hochgradig unlöslich (selbst gegenüber 1 % Na-Dodecylsulfat (SDS) bei erhöhter Temperatur) und können nur durch konzentrierte Trifluoressigsäure (TFA), bzw. Ameisensäure wieder dissoziiert werden. Im Gegensatz dazu sind die assemblierten Formen von Klasse II Hydrophobinen weniger stabil. Sie können bereits durch 60%iges Ethanol, bzw. 1 % SDS (bei Raumtemperatur) wieder aufgelöst werden.

Ein Vergleich der Aminosäuresequenzen zeigt, dass die Länge des Bereichs zwischen Cystein C³ und C⁴ bei Klasse II Hydrophobinen deutlich kürzer ist, als bei Hydrophobinen der Klasse I. Klasse II Hydrophobine weisen weiterhin mehr geladene Aminosäuren als Klasse I auf.

Besonders bevorzugte Hydrophobine zur Ausführung der vorliegenden Erfindung sind die Hydrophobine des Typs dewA, rodA, hypA, hypB, sc3, basf1, basf2, die im nachfolgenden Sequenzprotokoll strukturell charakterisiert sind. Es kann sich auch nur um Teile oder Derivate davon handeln. Es können auch mehrere Hydrophobinteile, bevorzugt 2 oder 3, gleicher oder unterschiedlicher Struktur miteinander verknüpft und mit einer entsprechenden geeigneten Polypeptidsequenz, die natürlicherweise nicht mit einem Hydrophobin verbunden ist, verknüpft werden.

Besonders geeignet zur Durchführung der vorliegenden Erfindung sind weiterhin die Fusionsproteine mit den in SEQ ID NO: 20, 22, 24 dargestellten Polypeptidsequenzen sowie den dafür codierenden Nukleinsäuresequenzen, insbesondere den Sequenzen gemäss SEQ ID NO: 19, 21, 23. Auch Proteine, die sich ausgehend von den in SEQ ID NO. 22, 22 oder 24 dargestellten Polypeptidsequenzen durch Austausch, Insertion oder Deletion von mindestens einer, bis hin zu 10. bevorzugt 5 , besonders bevorzugt 5% aller Aminosäuren ergeben, und die die biologische Eigenschaft der Ausgangsproteine noch zu mindestens 50% besitzen, sind besonders bevorzugte Ausführungsformen. Unter biologischer Eigenschaft der Proteine wird hierbei die bereits beschriebene Vergrößerung des Kontaktwinkels um mindestens 20° verstanden.

Die erfindungsgemäß verwendeten Proteine lassen sich chemisch durch bekannte Verfahren der Peptidsynthese, beispielsweise durch Festphasensynthese nach Merrifield herstellen.

Natürlich vorkommende Hydrophobine lassen sich aus natürlichen Quellen mittels geeigneter Methoden isolieren. Beispielhaft sei auf Wösten et. al., Eur. J Cell Bio. 63, 122-129 (1994) oder WO 96/41882 verwiesen.

Die Herstellung von Fusionsproteinen kann bevorzugt durch gentechnische Verfahren erfolgen, bei denen eine für den Fusionspartner und eine für den Hydrophobinteil codierende Nukleinsäuresequenz, insbesondere DNA-Sequenz, so kombiniert werden, dass in einem Wirtsorganismus durch Genexpression der kombinierten Nukleinsäuresequenz das gewünschte Protein erzeugt wird. Ein derartiges Herstellverfahren ist in unserer älteren Anmeldung DE 102005007480.4 offenbart.

Geeignete Wirtsorganismen (Produktionsorganismen) für das genannte Herstellverfahren können dabei Prokaryonten (einschließlich der Archaea) oder Eukaryonten sein, besonders Bakterien einschliesslich Halobacterien und Methanococcen, Pilze, Insektenzellen, Pflanzenzellen und Säugerzellen, besonders bevorzugt Escherichia coli, Bacillus subtilis, Bacillus, megaterium, Aspergillus oryzea, Aspergillus nidulans, Aspergillus niger, Pichia pastoris, Pseudomonas spec., Lactobacillen, Hansenula polymorpha, Trichoderma reesei, SF9 (bzw. verwandte Zellen) u.a.

Gegenstand der Erfindung ist außerdem die Verwendung von Expressionskonstrukten, enthaltend unter der genetischen Kontrolle regulativer Nukleinsäuresequenzen, eine für ein erfindungsgemäß verwendetes Polypeptid kodierende Nukleinsäuresequenz, sowie Vektoren, umfassend wenigstens eines dieser Expressionskonstrukte.

Vorzugsweise umfassen eingesetzte Konstrukte 5'-stromaufwärts von der jeweiligen kodierenden Sequenz einen Promotor und 3'-stromabwärts eine Terminatorsequenz sowie gegebenenfalls weitere übliche regulative Elemente, und zwar jeweils operativ verknüpft mit der kodierenden Sequenz.

Unter einer "operativen Verknüpfung" versteht man die sequentielle Anordnung von Promotor, kodierender Sequenz, Terminator und gegebenenfalls weiterer regulativer Elemente derart, dass jedes der regulativen Elemente seine Funktion bei der Expression der kodierenden Sequenz bestimmungsgemäß erfüllen kann.

Beispiele für operativ verknüpfbare Sequenzen sind Targeting-Sequenzen sowie Enhancer, Polyadenylierungssignale und dergleichen. Weitere regulative Elemente umfassen selektierbare Marker, Amplifikationssignale, Replikationsursprünge und dergleichen. Geeignete regulatorische Sequenzen sind z. B. beschrieben in Goeddel, Gene Expression Techno- logy : Methods in Enzymology 185, Academic Press, San Diego, CA (1990).

Zusätzlich zu diesen Regulationssequenzen kann die natürliche Regulation dieser Sequenzen vor den eigentlichen Strukturgenen noch vorhanden sein und gegebenenfalls genetisch verändert worden sein, so dass die natürliche Regulation ausgeschaltet und die Expression der Gene erhöht wurde.

Ein bevorzugtes Nukleinsäurekonstrukt enthält vorteilhaft auch eine oder mehrere der schon erwähnten "Enhancer"-Sequenzen, funktionell verknüpft mit dem Promotor, die eine erhöhte Expression der Nukleinsäuresequenz ermöglichen. Auch am 3'-Ende der DNA-Sequenzen können zusätzliche vorteilhafte Sequenzen inseriert werden, wie weitere regulatorische Elemente oder Terminatoren.

Die Nukleinsäuren können in einer oder mehreren Kopien im Konstrukt enthalten sein. Im Konstrukt können noch weitere Marker, wie Antibiotikaresistenzen oder Auxotrophien komplementierende Gene, gegebenenfalls zur Selektion auf das Konstrukt enthalten sein.

Vorteilhafte Regulationssequenzen für das Verfahren sind beispielsweise in Promotoren wie cos-, tac-, trp-, tet-, trp-, tet-, lpp-, lac-,lpp-lac-,laclq-T7-, T5-, T3-, gal-, trc-, ara-, rhaP(rhaPBAD) SP6-, lambda-PR-oder imlambda-P-Promotor enthalten, die vorteilhaft in gram-negativen Bakterien Anwendung finden. Weitere vorteilhafte Regulationssequenzen sind beispielsweise in den gram-positiven Promotoren amy und SP02, in den Hefe-oder Pilzpromotoren ADC1,MFalpha, AC, P-60, CYC1, GAPDH, TEF, rp28, ADH enthalten.

Es können auch künstliche Promotoren für die Regulation verwendet werden.

Das Nukleinsäurekonstrukt wird zur Expression in einem Wirtsorganismus vorteilhafterweise in einen Vektor, wie beispielsweise einem Plasmid oder einem Phagen inseriert, der eine optimale Expression der Gene im Wirt ermöglicht. Unter Vektoren sind außer Plasmiden und Phagen auch alle anderen dem Fachmann bekannten Vektoren, also z. B. Viren, wie SV40, CMV, Baculovirus und Adenovirus, Transposons,IS- Elemente, Phasmide, Cosmide, und lineare oder zirkuläre DNA, sowie das Agrobacterium-System zu verstehen.

Diese Vektoren können autonom im Wirtsorganismus repliziert oder chromosomal repliziert werden. Diese Vektoren stellen eine weitere Ausgestaltung der Erfindung dar. Geeignete Plasmide sind beispielsweise in E. coli pLG338, pACYC184, pBR322, pUC18,pUC19, pKC30, pRep4, pHS1, pKK223-3, pDHE19.2, pHS2, pPLc236, pMBL24, pLG200, pUR290,pIN-III"3-B1, tgt11 oder pBdCl, in StreptomycesplJ101, pIJ364,pIJ702 oderplJ361, in Bacillus pUB110, pC194 oder pBD214, in Corynebacterium pSA77 oder pAJ667, in Pilzen pALS1, pIL2 oder pBB116, in Hefen 2alpha, pAG-1, YEp6, YEp13 oder pEMBLYe23 oder in Pflanzen pLGV23,pGHlac+, pBIN19, pAK2004 oder pDH51. Die genannten Plasmide stellen eine kleine Auswahl der möglichen Plasmide dar. Weitere Plasmide sind dem Fachmann bekannt und können beispielsweise aus dem Buch Cloning Vectors (Eds. Pouwels P. H. et al. Elsevier, Ams- terdam-New York-Oxford, 1985, ISBN 0 444 904018) entnommen werden.

Vorteilhaft enthält das Nukleinsäurekonstrukt zur Expression der weiteren enthaltenen Gene zusätzlich noch 3'-und/oder 5'-terminale regulatorische Sequenzen zur Steigerung der Expression, die je nach ausgewähltem Wirtorganismus und Gen oder Gene für eine optimale Expression ausgewählt werden.

Diese regulatorischen Sequenzen sollen die gezielte Expression der Gene und der Proteinexpression ermöglichen. Dies kann beispielsweise je nach Wirtsorganismus bedeuten, dass das Gen erst nach Induktion exprimiert oder überexprimiert wird, oder dass es sofort exprimiert und/oder überexprimiert wird.

Die regulatorischen Sequenzen bzw. Faktoren können dabei vorzugsweise die Genexpression der eingeführten Gene positiv beeinflussen und dadurch erhöhen. So kann eine Verstärkung der regulatorischen Elemente vorteilhafterweise auf der Transkriptionsebene erfolgen, indem starke Transkriptionssignale wie Promotoren und/oder "Enhancer" verwendet werden. Daneben ist aber auch eine Verstärkung der Translation möglich, indem beispielsweise die Stabilität der mRNA verbessert wird.

In einer weiteren Ausgestaltungsform des Vektors kann der das Nukleinsäurekonstrukt oder die Nukleinsäure enthaltende Vektor auch vorteilhaft in Form einer linearen DNA in die Mikroorganismen eingeführt werden und über heterologe oder homologe Rekombination in das Genom des Wirtsorganismus integriert werden. Diese lineare DNA kann aus einem linearisierten Vektor wie einem Plasmid oder nur aus dem Nukleinsäurekonstrukt oder der Nukleinsäure bestehen.

Für eine optimale Expression heterologer Gene in Organismen ist es vorteilhaft die Nukleinsäuresequenzen entsprechend des im Organismus verwendeten spezifischen "codon usage"zu verändern. Der "codon usage" lässt sich anhand von Computerauswertungen anderer, bekannter Gene des betreffenden Organismus leicht ermitteln.

Die Herstellung einer Expressionskassette erfolgt durch Fusion eines geeigneten Promotors mit einer geeigneten kodierenden Nukleotidsequenz sowie einem Terminator- oder Polyadenylierungssignal. Dazu verwendet man gängige Rekombinations- und Klonierungstechniken, wie sie beispielsweise in T. Maniatis, E. F.Fritsch und J. Sambrook, Molecular Cloning : A Laboratory Manual, Cold Spring Harbor Laboratory, Cold Spring Harbor, NY (1989) sowie in T. J. Silhavy, M. L. Berman und L. W. Enquist, Experiments with Gene Fusions, Cold Spring Harbor Laboratory, Cold Spring Harbor, NY (1984) und in Ausubel, F. M. etal., Current Protocols in Molecular Biology, Greene Publishing Assoc. andWiley Interscience (1987) beschrieben sind.

Das rekombinante Nukleinsäurekonstrukt bzw. Genkonstrukt wird zur Expression in einem geeigneten Wirtsorganismus, vorteilhaft in einen wirtsspezifischen Vektor insertiert, der eine optimale Expression der Gene im Wirt ermöglicht. Vektoren sind dem Fachmann wohl bekannt und können beispielsweise aus "Cloning Vectors" (Pouwels P. H. et al., Hrsg, Elsevier, Amsterdam-New York-Oxford, 1985) entnommen wer- den.

Mit Hilfe der Vektoren sind rekombinante Mikroorganismen herstellbar, welche beispielsweise mit wenigstens einem Vektor transformiert sind und zur Produktion der erfindungsgemäß verwendeten Proteine eingesetzt werden können. Vorteilhafterweise werden die oben beschriebenen rekombinanten Konstrukte in ein geeignetes Wirtssystem eingebracht und exprimiert. Dabei werden vorzugsweise dem Fachmann bekannte geläufige Klonierungs- und Transfektionsmethoden, wie beispielsweise Co-Präzipitation, Protoplastenfusion, Elektroporation, retrovirale Transfektion und dergleichen, verwendet, um die genannten Nukleinsäuren im jeweiligen Expressionssystem zur Expression zu bringen. Geeignete Systeme werden beispielsweise in Current Protocols in Molecular Biology, F.Ausubel etal., Hrsg., Wiley Interscience, New York 1997, oder Sambrook et al. Molecular Cloning : A Laboratory Manual. 2. Aufl., Cold Spring Harbor Laboratory, Cold Spring Harbor Laboratory Press, Cold Spring Harbor, NY, 1989 beschrieben.

Es sind auch homolog rekombinierte Mikroorganismen herstellbar. Dazu wird ein Vektor hergestellt, der zumindest einen Abschnitt eines erfindungsgemäß zu verwendenden Gens oder einer kodierenden Sequenz enthält, worin gegebenenfalls wenigstens eine Aminosäure-Deletion, -Addition oder -Substitution eingebracht worden ist, um die Sequenz zu verändern, z. B. funktionell zu disruptieren ("Knockout"- Vektor). Die eingebrachte Sequenz kann z. B. auch ein Homologes aus einem verwandten Mikroorganismus sein oder aus einer Säugetier-, Hefe- oder Insektenquelle abgeleitet sein. Der zur homologen Rekombination verwendete Vektor kann alternativ derart ausgestaltet sein, dass das endogene Gen bei homologer Rekombination mutiert oder anderweitig verändert ist, jedoch noch das funktionelle Protein kodiert (z. B. kann der stromaufwärts gelegene regulatorische Bereich derart verändert sein, dass dadurch die Expression des endogenen Proteins verändert wird). Der veränderte Abschnitt des erfindungsgemäß verwendeten Gens ist im homologen Rekombinationsvektor. Die Konstruktion geeigneter Vektoren zur homologen Rekombination ist z. B. beschrieben in Thomas, K. R. und Capecchi, M. R. (1987) Cell 51 : 503.

Als rekombinante Wirtsorganismen für die erfindungsgemäß verwendete Nukleinsäure oder dem Nukleinsäurekonstrukt kommen prinzipiell alle prokaryontischen oder eukaryontischen Organismen in Frage. Vorteilhafterweise werden als Wirtsorganismen Mikroorganismen wie Bakterien, Pilze oder Hefen verwendet. Vorteilhaft werden grampositive oder gram-negative Bakterien, bevorzugt Bakterien der Familien Enterobacteriaceae, Pseudomonadaceae, Rhizobiaceae, Streptomycetaceae oder Nocardiaceae, besonders bevorzugt Bakterien der Gattungen Escherichia, Pseudomonas, Streptomyces, Nocardia, Burkholderia, Salmonella, Agrobacterium oder Rhodococcus verwendet.

Die im Herstellverfahren für Fusionsproteine verwendeten Organismen werden je nach Wirtsorganismus in dem Fachmann bekannter Weise angezogen bzw. gezüchtet. Mikroorganismen werden in der Regel in einem flüssigen Medium, das eine Kohlenstoffquelle meist in Form von Zuckern, eine Stickstoffquelle meist in Form von organischen Stickstoffquellen wie Hefeextrakt oder Salzen wie Ammoniumsulfat, Spurenelemente wie Eisen-, Mangan- und Magnesiumsalze sowie gegebenenfalls Vitamine enthält, bei Temperaturen zwischen 0 und100 °C, bevorzugt zwischen 10 bis 60 °C unter Sauerstoffbegasung angezogen. Dabei kann der pH-Wert der Nährflüssigkeit auf einem festen Wert gehalten werden, das heißt während der Anzucht reguliert werden oder nicht. Die Anzucht kann "batch"-weise, "semi-batch"-weise oder kontinuierlich erfolgen. Nährstoffe können zu Beginn der Fermentation vorgelegt oder semikontinuierlich oder kontinuierlich nachgefüttert werden. Die Enzyme können nach dem in den Beispielen beschriebenen Verfahren aus den Organismen isoliert werden oder als Rohextrakt für die Reaktion verwendet werden.

Erfindungsgemäß verwendete Proteine oder funktionelle, biologisch aktive Fragmente davon, können mittels eines rekombinanten Verfahrens hergestellt werden, bei dem man einen Proteine-produzierenden Mikroorganismus kultiviert, gegebenenfalls die Expression der Proteine induziert und diese aus der Kultur isoliert. Die Proteine können so auch in großtechnischem Maßstab produziert werden, falls dies erwünscht ist. Der rekombinante Mikroorganismus kann nach bekannten Verfahren kultiviert und fermentiert werden. Bakterien können beispielsweise in TB-oder LB-Medium und bei einer Temperatur von 20 bis 40°C und einem pH-Wert von 6 bis 9 vermehrt werden. Im Einzelnen werden geeignete Kultivierungsbedingungen beispielsweise in T. Maniatis, E. F. Fritsch and J. Sambrook, Molecular Cloning : A Laboratory Manual, Cold Spring Harbor Laboratory, Cold Spring Harbor, NY (1989) beschrieben.

Die Zellen werden dann, falls die erfindunsgemäß verwerdeten Proteine nicht in das Kulturmedium sezerniert werden, aufgeschlossen und das Produkt nach bekannten Proteinisolierungsverfahren aus dem Lysat gewonnen. Die Zellen können wahlweise durch hochfrequenten Ultraschall, durch hohen Druck, wie z. B. in einer French-Druckzelle, durch Osmolyse, durch Einwirkung von Detergenzien, lytischen Enzymen oder organischen Lösungsmitteln, durch Homogenisatoren oder durch Kombination mehrerer der aufgeführten Verfahren aufgeschlossen werden.

Eine Aufreinigung der erfindunsgemäß verwendeten Proteine kann mit bekannten, chromatographischen Verfah- ren erzielt werden, wie Molekularsieb-Chromatographie (Gelfiltration), wie Q- Sepharose-Chromatographie, lonenaustausch-Chromatographie und hydrophobe Chromatographie, sowie mit anderen üblichen Verfahren wie Ultrafiltration,Kristallisati- on, Aussalzen, Dialyse und nativerGelelektrophorese. Geeignete Verfahren werden beispielsweise in Cooper, F. G., Biochemische Arbeitsmethoden, Verlag Water de Gruyter, Berlin, New York oder in Scopes, R., Protein Purification, Springer Verlag, New York, Heidelberg, Berlin beschrieben.

Vorteilhaft kann es sein, zur Isolierung des rekombinanten Proteins Vektorsysteme oder Oligonukleotide zu verwenden, die die cDNA um bestimmte Nukleotidsequenzen verlängern und damit für veränderte Proteine oder Fusionsproteine kodieren, die beispielsweise einer einfacheren Reinigung dienen. Derartige geeignete Modifikationen umfassen als Anker fungierende sogenannte "Tags", wie beispielsweise die als Hexa-Histidin-Anker bekannte Modifikation oder Epitope, die als Antigene von Antikörpern erkannt werden können (beschrieben zum Beispiel in Harlow, E. and Lane, D., 1988, Antibodies : A Laboratory Manual. Cold Spring Harbor (N. Y. ) Press). Weitere geeignete Tags sind z.B. HA, Calmodulin-BD, GST, MBD; Chitin-BD, Steptavidin-BD-Avi-Tag, Flag-Tag, T7 etc. Diese Anker können zur Anheftung der Proteine an einen festen Träger, wie z. B. einer Polymermatrix, dienen, die beispielsweise in einer Chromatographiesäule eingefüllt sein kann, oder an einer Mikrotiterplatte oder an einem sonstigen Träger verwendet werden kann. Die entsprechenden Reinigungsprotokolle sind von den kommerziellen Affinitäts-Tag-Anbietern erhältlich.

Die wie beschrieben hergestellten Proteine können sowohl direkt als Fusionsproteine als auch nach Abspaltung und Abtrennung des Fusionspartners als "reine" Hydrophobine verwendet werden.

Wenn eine Abtrennung des Fusionspartners vorgesehen ist, empfiehlt es sich eine potentielle Spaltstelle (spezifische Erkennungsstelle für Proteasen) in das Fusionsprotein zwischen Hydrophobinteil und Fusionspartnerteil einzubauen. Als Spaltstelle geeignet sind insbesondere solche Peptidsequenzen geeignet, die ansonsten weder im Hydrophobinteil noch im Fusionspartnerteil vorkommen, was sich mit bioinformatischen Tools leicht ermitteln lässt. Besonders geeignet sind beispielsweise BrCN-Spaltung an Methionin, oder durch Protease vermittelte Spaltiung mit Faktor Xa-, Enterokinase-, Thrombin, TEV-Spaltung (Tobacca etch virus Protease).

Die Beschichtung der expandierbaren oder expandierten, thermoplastischen Polymer-Partikel kann vor oder nach dem Verschäumen, beispielsweise durch Auftrommeln von Hydrophobin in einem Schaufelmischer (Fa. Lödige) oder durch in Kontaktbringen der Oberfläche der Polymer-Partikel mit einer Hydrophobin-haltigen Lösung, beispielsweise durch Tauchen oder Sprühen, erfolgen. Bei der Herstellung durch Extrusion einer treibmittelhaltigen Schmelze kann das Hydrophobin auch dem Wasserkreislauf des Unterwassergranulators zugegeben werden.

Bevorzugt wird zur Beschichtung der expandierbaren oder expandierten, thermoplastischen Polymer-Partikel r eine wässrige Lösung mit einer Konzentration von 1 bis 100 g/l Hydrophobin und einem pH-Wert im Bereich von 5 bis 9 verwendet. Das Aufbringen der Hyrophobin-haltige Lösung erfolgt in der Regel bei einer Temperatur im Bereich von 0 bis 140°C, bevorzugt im Bereich von 30 bis 80°C.

Die erfindungsgemäßen expandierbaren und expandierten, thermoplastische Polymerpartikel sind antistatisch ausgerüstet, zeigen eine geringe Neigung zur Verklebung beim Vorschäumen, jedoch eine gute Verschweißung beim Verschäumen zu Formteilen.

### Beispiele:

### Beispiel 1

### Vorarbeiten für die Klonierung von yaad-His₆/ yaaE-His₆

Mit Hilfe der Oligonukleotide Hal570 und Hal571 (Hal 572/ Hal 573) wurde eine Polymerase Kettenreaktion durchgeführt. Als Template DNA wurde genomische DNA des Bakteriums Bacillus subtilis verwendet. Das erhaltene PCR Fragment enthielt die codierende Sequenz des Gens yaaD / yaaE aus Bacillus subtilis, und an den Enden je eine Ncol bzw. BglII Restriktionsschnittstelle. Das PCR Fragment wurde gereinigt und mit den Restriktionsendonukleasen Ncol und BglII geschnitten. Dieses DNA Fragment wurde als Insert verwendet, und in den zuvor mit den Restriktionsendonukleasen Ncol und BglII linearisierten Vektor pQE60 der Firma Qiagen kloniert. Die so enstandenen Vektoren pQE60YAAD#2 / pQE60YaaE#5 können zur Expression von Proteinen bestehend aus, YAAD::HIS₆ bzw. YAAE::HIS₆ verwendet werden.
Hal570: gcgcgcccatggctcaaacaggtactga
Hal571: gcagatctccagccgcgttcttgcatac
Hal572: ggccatgggattaacaataggtgtactagg
Hal573: gcagatcttacaagtgccttttgcttatattcc

### Beispiel 2

### Klonierung von yaad-Hydrophobin DewA-His₆

Mit Hilfe der Oligonukleotide KaM 416 und KaM 417 wurde eine Polymerase Kettenreaktion durchgeführt. Als Template DNA wurde genomische DNA des Schimmelpilzes Aspergillus nidulans verwendet. Das erhaltene PCR Fragment enthielt die codierende Sequenz des Hydrophobin Gens dewA und einer N-Terminalen FaktorXa Proteinase Schnittstelle. Das PCR Fragment wurde gereinigt und mit der Restriktionsendonuklease BamHI geschnitten. Dieses DNA Fragment wurde als Insert verwendet, und in den zuvor mit der Restriktionsendonuklease BglII linearisierten Vektor pQE60YAAD#2 kloniert.

Der so enstandene Vektor #508 kann zur Expressions eines Fusionsproteins bestehend aus, YAAD::Xa::dewA::HiS₆ verwendet werden.
KaM416: GCAGCCCATCAGGGATCCCTCAGCCTTGGTACCAGCGC
KaM417: CCCGTAGCTAGTGGATCCATTGAAGGCCGCAT-GAAGTTCTCCGTCTCCGC

### Beispiel 3

### Klonierung von yaad-Hydrophobin RodA-His₆

Die Klonierung des Plasmids #513 erfolgte analog zu Plasmid #508 unter Verwendung der Oligonukleotide KaM 434 und KaM 435.
KaM434: GCTAAGCGGATCCATTGAAGGCCGCATGAAGTTCTCCATTGCTGC
KaM435: CCAATGGGGATCCGAGGATGGAGCCAAGGG

### Beispiel 4

### Klonierung von yaad-Hydrophobin BASF1-His₆

Die Klonierung des Plasmids #507 erfolgte analog zu Plasmid #508 unter Verwendung der Oligonukleotide KaM 417 und KaM 418.
Als Template DNA wurde ein künstlich synthetisierte DNA Sequenz - Hydrophobin BASF1 -eingesetzt (siehe Anhang).
KaM417:CCCGTAGCTAGTGGATCCATTGAAGGCCGCAT-GAAGTTCTCCGTCTCCGC
KaM418: CTGCCATTCAGGGGATCCCATATGGAGGAGGGAGACAG

### Beispiel 5

### Klonierung von yaad-Hydrophobin BASF2-His₆

Die Klonierung des Plasmids #506 erfolgte analog zu Plasmid #508 unter Verwendung der Oligonukleotide KaM 417 und KaM 418.
Als Template DNA wurde ein künstlich synthetisierte DNA Sequenz - Hydrophobin BASF2 -eingesetzt (siehe Anhang).
KaM417:CCCGTAGCTAGTGGATCCATTGAAGGCCGCAT-GAAGTTCTCCGTCTCCGC
KaM418: CTGCCATTCAGGGGATCCCATATGGAGGAGGGAGACAG

### Beispiel 6

### Klonierung von yaad-Hydrophobin SC3-His₆

Die Klonierung des Plasmids #526 erfolgte analog zu Plasmid #508 unter Verwendung der Oligonukleotide KaM464 und KaM465.
Als Template DNA wurde cDNA von Schyzophyllum commune eingesetzt (siehe Anhang).
KaM464: CGTTAAGGATCCGAGGATGTTGATGGGGGTGC
KaM465: GCTAACAGATCTATGTTCGCCCGTCTCCCCGTCGT

### Beispiel 7

### Fermentation des rekombinanten E.coli Stammes yaad-Hydrophobin DewA-His₆

Inokulation von 3ml LB Flüssigmedium mit einem yaad-Hydrophobin DewA-His₆ exprimierenden E.coli Stamm in 15ml Greiner Röhrchen. Inkubation für 8h bei 37°C auf einem Schüttler mit 200 UpM. Je 2 1I Erlenmeyer Kolben mit Schikanen und 250ml LB Medium (+ 100µg/ml Ampicillin) werden mit jeweils 1ml der Vorkultur angeimpft und 9h bei 37°C auf einem Schüttler mit 180 UpM inkubiert.
13.5I LB-Medium (+100µg/ml Ampicillin) in einem 201 Fermenter mit 0,51 Vorkultur (OD₆₀₀ₙₘ 1:10 gegen H₂O gemessen) animpfen. Bei einer OD₆₀ₙₘ von -3.5 Zugabe von 140ml 100mM IPTG. Nach 3h Fermenter auf 10°C abkühlen und Fermentationsbrühe abzentrifugieren. Zellpellet zur weiteren Aufreinigung verwenden.

### Beispiel 8

### Reinigung des rekombinanten Hydrohobin-Fusionsproteins

### (Reinigung von Hydrophobin-Fusionsproteinen, die ein C-terminales His6-tag besitzen)

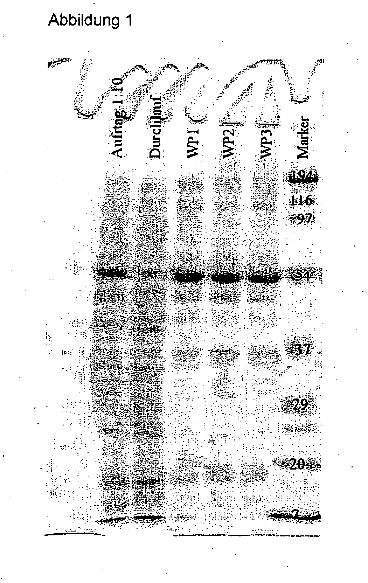

100 g Zellpellet (100 - 500 mg Hydrophobin) werden mit 50 mM Natriumphosphatpuffer, pH 7,5 auf 200 ml Gesamtvolumen aufgefüllt und resuspendiert. Die Suspension wird mit einem Ultraturrax Typ T25 (Janke und Kunkel; IKA-Labortechnik) für 10 Minuten behandelt und anschliessend für 1 Stunde bei Raumtemperatur mit 500 Einheiten Benzonase (Merck, Darmstadt; Best.-Nr. 1.01697.0001) zum Abbau der Nukleinsäuren inkubiert. Vor dem Zellaufschluss wird mit einer Glaskartusche (P1) filtriert. Zum Zellaufschluß und für das Scheren der restlichen genomischen DNA werden zwei Homogenisatorläufe bei 1.500 bar durchgeführt (Microfluidizer M-110EH; Microfluidics Corp.). Das Homogenisat wird zentrifugiert (Sorvall RC-5B, GSA-Rotor, 250 ml Zentrifugenbecher, 60 Minuten, 4°C, 12.000 Upm, 23.000 g), der Überstand auf Eis gestellt und das Pellet in 100 ml Natriumphosphatpuffer, pH 7,5 resuspendiert. Zentrifugation und Resuspendieren werden dreimal wiederholt, wobei der Natriumphosphatpuffer bei der dritten Wiederholung 1 % SDS enthält. Nach der Resuspension wird für eine Stunde gerührt und eine abschliessende Zentrifugation durchgeführt (Sorvall RC-5B, GSA-Rotor, 250 ml Zentrifugen becher, 60 Minuten, 4°C, 12.000 Upm, 23.000 g). Gemäß SDS-PAGE Analyse ist das Hydrophobin nach der abschliessenden Zentrifugation im Überstand enthalten (Abbildung 1). Die Versuche zeigen, dass das Hydrophobin wahrscheinlich in Form von Einschlusskörpern in den entsprechenden E.coli Zellen enthalten ist. 50 ml des Hydrophobin-enthaltenden Überstandes werden auf eine 50 ml Nickel-Sepharose High Performance 17-5268-02 Säule aufgetragen (Amersham), die mit 50 mM Tris-Cl pH 8,0 Puffer äquilibriert wurde. Die Säule wird mit 50 mM Tris-Cl pH 8,0 Puffer gewaschen und das Hydrophobin anschliessend mit 50 mM Tris-Cl pH 8,0 Puffer, der 200 mM Imidazol enthält, eluiert. Zur Entfernung des Imidazols wird die Lösung gegen 50 mM Tris-Cl pH 8,0 Puffer dialysiert.

Abbildung 1 zeigt die Reinigung des hergestellten Hydrophobins:

| | |
|---|---|
| Spur 1: | Auftrag Nickel-Sepharose Säule (1:10 Verdünnung) |
| Spur 2: | Durchlauf = Eluat Waschschritt |
| Spuren 3 - 5: | OD 280 Maxima der Elutionsfraktionen |

Das Hydrophobin der Abbildung 1 besitzt ein Molekulargewicht von ca. 53 kD. Die kleineren Banden repräsentieren zum Teil Abbauprodukte des Hydrophobins.

### Beispiel 9

### Anwendungstechnische Prüfung; Charakterisierung des Hydrophobins durch Kontaktwinkeländerung eines Wassertropfens auf Glas

### Substrat:

Glas (Fensterglas, Süddeutsche Glas, Mannheim):
- Konzentration Hydrophobin: 100 µg/mL
- Inkubation von Glasplättchen über Nacht (Temperatur 80°C) in 50mM Na-Acetat pH 4 + 0,1 % Polyoxyethylen(20)sorbitanmonolaureat (Tween® 20)
- danach Beschichtung waschen in destilliertem Wasser
- danach Inkubation 10min / 80°C / 1% Natrium-Dodecylsulfat (SDS) -Lösung in dest. Wasser
- Waschen in dest. Wasser

Die Proben werden an der Luft getrocknet und der Kontaktwinkel (in Grad) eines Tropfens von 5 µl Wasser bei Raumtemperatur bestimmt.

Die Kontaktwinkelmessung wurde auf einem Gerät Dataphysics Contact Angle System OCA 15+, Software SCA 20.2.0. (November 2002) bestimmt. Die Messung erfolgte gemäss den Herstellerangaben.

Unbehandeltes Glas ergab einen Kontaktwinkel von 30 ± 5°; eine Beschichtung mit dem funktionellen Hydrophobin gemäss Beispiel 8 (yaad-dewA-his₆) ergab Kontaktwinkel von 75 ± 5°.

### Beispiel 10 und 11

### Beschichtung von EPS-Perlen mit Hydrophobin pQE60+YaaD+Xa+dewA+HIS6

### Beschichtungsmittel:

Wässrige Lösung von Hydrophobin pQE60+YaaD+Xa+dewA+HIS6 (SEQ ID NO: 19), welches gemäß Beispiel 8 vorbehandelt wurde. (50 mM NaH2PO4, pH 7.5, Konzentration Hydrophobin 6.08 g/l)

Durch Suspensionspolymerisation hergestellte, unbeschichtete, expandierbare Polystyrol (EPS)-Perlen mit einem Perlgrößenbereich von 0,7 bis 1,0 mm (Styropor ® F 315/N) wurde getrocknet und wie folgt beschichtet:

50 g EPS-Perlen wurden in einem 500 ml Schraubdeckelglas eingewogen, mit 10 ml bzw. 20 ml der Hydrophobin-Lösung versetzt und 24 Stunden bei Raumtemperatur auf einem "Rollstuhl" bewegt. Anschließend wurdne die mit Hydrophobin beschichteten EPS-Perlen auf einem Filterpapier ausgelegt und 5 Stunden bei Raumtemperatur getrocknet.

### Vergleichsversuch V1

Beispiel 10 wurde wiederholt mit dem Unterschied, dass anstelle der Hydrophobin-Lösung 10 ml destilliertes Wasser verwendet wurde.

Die beschichteten EPS-Perlen der Beispiele 10 und 11 und des Vergleichsversuches wurden jeweils für 2 Minuten bei 100°C im Rauscherkasten zu Polystyrol-Schaumperlen vorgeschäumt und nach 3 Tagen Lagerung zu Formteilen verschweißt. Zur Beurteilung der Güte der Verschweißung wurden die Formteile nach 2 Tagen Lagerung in der Mitte durchgebrochen.

Zur Beurteilung der antistatischen Eigenschaften wurde der Oberflächenwiderstand der vorgeschäumten und getrockneten Polystyrolschaumperlen gemessen.

**Tabelle 1**

| Beispiel | Hydrophobin- Lösung | Verklebung der vorgeschäumten EPS-Perlen | Verschweißung | Antistatik (Oberflächenwiderstand) |
|---|---|---|---|---|
| 10 | 10 ml | wenig | Sehr gut | < 10¹⁰ Ohm. |
| 11 | 20 ml | wenig | gut | |
| V1 | 0 ml | Stark | schlecht | > 10¹⁴ Ohm |

Zuordnung der Sequenznamen zu DNA- und Polypeptidsequenzen im Sequenzprotokoll

| | |
|---|---|
| dewA DNA- und Polypeptidsequenz | SEQ ID NO: 1 |
| dewA Polypeptidsequenz | SEQ ID NO: 2 |
| rodA DNA- und Polypeptidsequenz | SEQ ID NO: 3 |
| rodA Polypeptidsequenz | SEQ ID NO: 4 |
| hypA DNA- und Polypeptidsequenz | SEQ ID NO: 5 |
| hypA Polypeptidsequenz | SEQ ID NO: 6 |
| hypB DNA- und Polypeptidsequenz | SEQ ID NO: 7 |
| hypB Polypeptidsequenz | SEQ ID NO: 8 |
| sc3 DNA- und Polypeptidsequenz | SEQ ID NO: 9 |
| sc3 Polypeptidsequenz | SEQ ID NO: 10 |
| basf1 DNA- und Polypeptidsequenz | SEQ ID NO: 11 |
| basf1 Polypeptidsequenz | SEQ ID NO: 12 |
| basf2 DNA- und Polypeptidsequenz | SEQ ID NO: 13 |
| basf2 Polypeptidsequenz | SEQ ID NO: 14 |
| yaad DNA- und Polypeptidsequenz | SEQ ID NO: 15 |
| yaad Polypeptidsequenz | SEQ ID NO: 16 |
| yaae DNA- und Polypeptidsequenz | SEQ ID NO: 17 |
| yaae Polypeptidsequenz | SEQ ID NO: 18 |
| yaad-Xa-dewA-his₆ DNA- und Polypeptid-sequenz | SEQ ID NO: 19 |
| yaad-Xa-dewA-his Polypeptidsequenz | SEQ ID NO: 20 |
| yaad-Xa-rodA-his DNA- und Polypeptid-sequenz | SEQ ID NO: 21 |
| yaad-Xa-rodA-his Polypeptidsequenz | SEQ ID NO: 22 |
| yaad-Xa-basf1-his DNA- und Polypeptid-sequenz | SEQ ID NO: 23 |
| yaad-Xa-basf1-his Polypeptidsequenz | SEQ ID NO: 24 |

## Patentansprüche

1. Expandierbare oder expandierte, thermoplastische Polymer-Partikel mit einer Beschichtung enthaltend Hydrophobin.

2. Expandierbare oder expandierte, thermoplastische Polymer-Partikel nach Anspruch 1, **dadurch gekennzeichnet, dass** die Beschichtung 1 bis 5000 ppm Hydrophobin, bezogen auf das thermoplastische Polymer, enthält.

3. Expandierbare oder expandierte, thermoplastische Polymer-Partikel nach Anspruch 1, **dadurch gekennzeichnet, dass** das thermoplastische Polymer aus Polystyrol oder Polyolefin besteht.

4. Expandierbare oder expandierte, thermoplastische Polymer-Partikel nach einem der Ansprüche 1 bis 3, **dadurch gekennzeichnet, das** sie einen mittleren Teilchendurchmesser im Bereich von 0,05 bis 5 mm aufweisen.

5. Expandierbare oder expandierte, thermoplastische Polymer-Partikel nach einem der Ansprüche 1 bis 4, **dadurch gekennzeichnet, dass** die Beschichtung ein Hydophobin der allgemeinen Formel (II)
Xₙ-C¹-X₃₋₂₅-C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)
enthält, wobei X für jede der 20 natürlich vorkommenden Aminosäuren steht, n und m für Zahlen zwischen 0 und 500 stehen,
C für Cystein steht.

6. Expandierbare oder expandierte, thermoplastische Polymer-Partikel nach Anspruch 4, **dadurch gekennzeichnet, dass** die Beschichtung ein Hydophobin der allgemeinen Formel (III)
Xₙ-C¹-X₅₋₉-C²-C³-X₁₁₋₃₉-C⁴-X₂₋₂₃-C⁵-X₅₋₉-C⁶-C⁷-X₆₋₁₈-C⁸-Xₘ (III)
enthält.

7. Expandierbare oder expandierte, thermoplastische Polymer-Partikel nach einem der Ansprüche 1 bis 4, **dadurch gekennzeichnet, dass** die Beschichtung ein Hydrophobin des Typs dewA, rodA, hjypA, hypB, sc3, basf1 oder basf2 enthält.

8. Verfahren zur Beschichtung von expandierbaren oder expandierten, thermoplastischen Polymer-Partikel, **dadurch gekennzeichnet, dass** man die Oberfläche der Polymer-Partikel mit einer Hydrophobin-haltigen Lösung in Kontakt bringt.

9. Verfahren nach einem der Ansprüche 1 bis 4, **dadurch gekennzeichnet, dass** als Hydrophobin-haltige Lösung eine wässrige Lösung mit einer Konzentration von 1 bis 100 g/l Hydrophobin und einem pH-Wert im Bereich von 5 bis 9 verwendet wird.

10. Verfahren nach einem der Ansprüche 1 bis 5, **dadurch gekennzeichnet, dass** man die Oberfläche mit der Hyrophobin-haltige Lösung bei einer Temperatur im Bereich von 0 bis 140°C in Kontakt bringt.

## Claims

1. An expandable or expanded, thermoplastic polymer particle with a coating comprising hydrophobin.

2. The expandable or expanded, thermoplastic polymer particle according to claim 1, wherein the coating comprises from 1 to 5000 ppm of hydrophobin, based on the thermoplastic polymer.

3. The expandable or expanded, thermoplastic polymer particle according to claim 1, wherein the thermoplastic polymer consists of polystyrene or polyolefin.

4. The expandable or expanded, thermoplastic polymer particle according to any of claims 1 to 3, which has an average particle diameter in the range of 0.05 to 5 mm.

5. The expandable or expanded, thermoplastic polymer particle according to any of claims 1 to 4, wherein the coating comprises a hydrophobin of the general formula (II)
Xₙ-C¹-X₃₋₂₅-C²-X₀₋₂-C³-X₅₋₅₀-C⁴-X₂₋₃₅-C⁵-X₂₋₁₅-C⁶-X₀₋₂-C⁷-X₃- 35-C⁸-Xₘ (II),
where X is any of the 20 naturally occurring amino acids,
n and m are numbers between 0 and 500, C is cysteine.

6. The expandable or expanded, thermoplastic polymer particle according to claim 4, wherein the coating comprises a hydrophobin of the general formula (III)
Xₙ-C¹-X₅₋₉-C²-C³-X₁₁₋₃₉-C⁴-X₂₋₂₃C⁵-X₅₋₉-C⁶-C⁷-X₆₋₁₈-C⁸-Xₘ (III).

7. The expandable or expanded, thermoplastic polymer particle according to any of claims 1 to 4, wherein the coating comprises a dewA, rodA, hjypA, hypB, sc3, basf1 or basf2 type hydrophobin.

8. A process for coating expandable or expanded, thermoplastic polymer particles, wherein the surface of the polymer particles is contacted with a hydrophobin-containing solution.

9. The process according to any of claims 1 to 4, wherein the hydrophobin-containing solution used is an aqueous solution with a hydrophobin concentration of from 1 to 100 g/l and a pH in the range of 5 to 9.

10. The process according to any of claims 1 to 5, wherein the surface is contacted with the hydrophobin-containing solution at a temperature in the range of 0 to 140 °C.

## Revendications

1. Particules polymères expansibles ou expansées, thermoplastiques, présentant un revêtement contenant de l'hydrophobine.

2. Particules polymères expansibles ou expansées, thermoplastiques, selon la revendication 1, **caractérisées en ce que** le revêtement contient 1 à 5000 ppm d'hydrophobine, par rapport au polymère thermoplastique.

3. Particules polymères expansibles ou expansées, thermoplastiques, selon la revendication 1, **caractérisées en ce que** le polymère thermoplastique est constitué par un polystyrène ou une polyoléfine.

4. Particules polymères expansibles ou expansées, thermoplastiques, selon l'une quelconque des revendications 1 à 3, **caractérisées en ce qu'**elles présentent un diamètre moyen des particules dans la plage de 0,05 à 5 mm.

5. Particules polymères expansibles ou expansées, thermoplastiques, selon l'une quelconque des revendications 1 à 4, **caractérisées en ce que** le revêtement contient une hydrophobine de formule générale (II)
Xₙ-C¹-X₃₋₂₅C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)
dans laquelle
X représente chacun des 20 acides aminés naturels,
n et m représentent des nombres entre 0 et 500,
C représente la cystéine.

6. Particules polymères expansibles ou expansées, thermoplastiques, selon la revendication 4, **caractérisées en ce que** le revêtement contient une hydrophobine de formule générale (III)
Xₙ-C¹-X₅₋₉C²-C³-X₁₁₋₃₉-C⁴-X₂₋₂₃-C⁵-X₅₋₉-C⁵-C⁷-X₆₋₁₈-C⁸-Xₘ (III)

7. Particules polymères expansibles ou expansées, thermoplastiques, selon l'une quelconque des revendications 1 à 4, **caractérisées en ce que** le revêtement contient une hydrophobine du type dewA, rodA, hjypA, hypB, sc3, basf1 ou basf2.

8. Procédé pour le revêtement de particules polymères expansibles ou expansées, thermoplastiques, **caractérisé en ce qu'**on met la surface des particules polymères en contact avec une solution contenant de l'hydrophobine.

9. Procédé selon l'une quelconque des revendications 1 à 4, **caractérisé en ce qu'**on utilise comme solution contenant de l'hydrophobine une solution aqueuse présentant une concentration de 1 à 100 g/l d'hydrophobine et un pH dans la plage de 5 à 9.

10. Procédé selon l'une quelconque des revendications 1 à 5, **caractérisé en ce qu'**on met la surface en contact avec la solution contenant de l'hydrophobine à une température dans la plage de 0 à 140°C.
